# EUROPÄISCHE PATENTSCHRIFT

(11) **EP 1 108 679 B1**
(45) Veröffentlichungstag und Bekanntmachung des Hinweises auf die Patenterteilung: **08.10.2003**
(21) Anmeldenummer: 00125892.0
(22) Anmeldetag: 27.11.2000
(51) Int. Cl.: C01F 7/00, C02F 1/52, D21H 21/16, D21H 17/66, D21H 21/10

(54) **Polyaluminiumnitratsulfate, Verfahren zu deren Herstellung und deren Verwendung**
Polyaluminium nitrate sulfates, process for the preparation thereof
Nitrate sulfate de polyaluminium, procédé de preparation et leurs utilisations

(30) Priorität: 16.12.1999 DE 19960702
(43) Veröffentlichungstag der Anmeldung: 20.06.2001
(73) Patentinhaber: Sachtleben Chemie GmbH, 47198 Duisburg (DE)
(72) Erfinder: Faber, Wolfgang, 47229 Duisburg (DE); Vollmuth, Stefan, Dr., 47803 Krefeld (DE); Vukovic, Ante, 47475 Kamp-Lintfort (DE); Lebioda, Tanja, 47228 Duisburg (DE)
(74) Vertreter: Uppena, Franz, Dr.

(56) Entgegenhaltungen:
- DE-A- 1 907 359
- GB-A- 950 208
- US-A- 5 120 522
- US-A- 5 518 706
- US-A- 5 938 970

## Beschreibung

Die Erfindung betrifft Verfahren zur Herstellung von Polyaluminiumnitratsulfaten und deren Verwendung.

In der Wasseraufbereitung werden üblicherweise in Abhängigkeit von der Art der Verschmutzung als Flockungs- und Koagulierungsmittel Aluminiumverbindungen z. B. Aluminiumchlorid, Aluminiumsulfat, Polyaluminiumchloride, Eisenverbindungen, z. B. Eisensulfat, Eisenchloride sowie kationische, anionische und nichtionische Polyelektrolyte z. B. Polyacrylamid, Polydadmac, Polyamin und Schichtsilikate, z. B. Bentonit eingesetzt.

Neben diesen traditionell verwendeten Produkten werden seit einigen Jahren zunehmend Aluminiumhydroxidchloride als Flockungsmittel verwendet, insbesondere für anspruchsvolle Aufgaben, z. B. im Trinkwasserbereich. Aluminiumhydroxidchloride sind als Polyaluminiumchloride (PAC) bekannt und durch die Formel [Al(OH)ₓ Cl_{y}]ₙ, x+y=3 charakterisiert. Dabei ist n die einem Polymerisationsgrad vergleichbare Zahl an Aluminumionen in dem Aluminiumkomplex. Polymere Aluminiumhydroxidchloride eignen sich besser zur Flockung und Koagulation als einfache Aluminiumsalze, wodurch erforderliche Dosiermengen verringert werden können. Anwendererfahrungen bezeugen eine verbesserte Trübstoffaggregation, so dass teilweise auf die Zugabe von Flockungshilfsmitteln verzichtet werden kann. Der Einsatz von Polyaluminiumchloriden bewirkt außerdem eine geringere Absenkung des pH-Wertes, zudem ist der Eintrag an Anionen in das Wasser geringer als bei Verwendung von Neutralsalzen. Schließlich ist die bessere Wirksamkeit von Polyaluminiumchloriden bei niedrigen Wassertemperaturen zu nennen, für den Winterbetrieb ein nicht zu unterschätzender Vorteil.

Alle Flockungsmittel müssen durch den Flockungsprozess wieder aus dem Wasser entfernt werden und dürfen gesetzlich festgelegte Grenzwerte nicht überschreiten. Polyelektrolytrückstände im Trinkwasser sind in vielen Fällen aufgrund ihres Restmonomer- Gehalts ein gesundheitliches Risiko. Im Wasser verbleibende Eisensalze führen zu einer gelben Färbung und im Falle von Trinkwasser zu einer Geschmacksbeeinträchtigung. Eisen- und Aluminiumkonzentrationen sind im Trinkwie im Abwasserbereich stark reglementiert.

In der Papierindustrie werden Polyaluminiumchloride zur Störstofffixierung, Leimung, Retention, Entwässerung, Stärkefixierung und Abwasseroptimierung eingesetzt. Der Vorteil von Polyaluminiumchloriden gegenüber Aluminiumsulfat liegt in einer geringeren Systemaufsalzung, einer geringeren pH-Wert-Absenkung, einer besseren Fixierung von Stör-, Fein- und Hilfsstoffen und der ungleich geringeren Kreideauflösung bei Neutralfahrweise.

Polyaluminiumchloride bzw. Polyaluminiumchloridsulfate werden in der Regel nach zwei Verfahren hergestellt. Einmal wird ein aluminiumhaltiger Rohstoff z. B. Aluminiumhydroxid mit Schwefelsäure und Salzsäure aufgeschlossen und mit einem basischen, kalziumhaltigen Reagenz z. B. Kalziumchlorid, Kalziumhydrid neutralisiert. Der hierbei anfallende Gips wird abgetrennt (DE-A-1907359, US-A-5603912, US-A-5124139). Zum anderen wird ein aluminiumhaltiger Rohstoff, z. B. Aluminiumhydroxid im Überschuss mit Schwefelsäure und Salzsäure in einem Druckreaktor bei Temperaturen > 130 °C aufgeschlossen. Der anfallende Aufschluss ist in der Regel nicht stabil und muss mit Wasser verdünnt werden (DE-A-2163711, EP-A-0884278). Durch die zunehmende Umstellung auf geschlossene Wasserkreisläufe in der Industrie treten bei Verwendung chloridhaltiger Prozesschemikalien in diesen Systemen hohe Chlorid-Konzentrationen von bis zu 3000 mg/l auf. Diese Chlorid-Konzentrationen können zu erheblichen Korrosionserscheinungen an den Anlageteilen führen. Die Verwendung von Polyaluminiumchloriden trägt ebenfalls zur Erhöhung der Chloridfrachten bei.

Es ist die Aufgabe der vorliegenden Erfindung ein Flockungsmittel zur Wasserbehandlung bereitzustellen, mit dem die vorstehend angegebenen Nachteile vermieden werden, das kompakte, stabile, durch Flotation oder Sedimentation problemlos vom Wasser abtrennbare Flocken bildet, und das in der Papierindustrie zur Störstofffixierung, Leimung, Retention, Entwässerung, Stärkefixierung geeignet ist.

Die Lösung dieser Aufgabe erfolgt durch Polyaluminiumnitratsulfate der Zusammensetzung
5,0 bis 5,6 Gew.- % Aluminium
2,4 bis 3,2 Gew.- % Sulfat
14,5 bis 24,0 Gew.- % Nitrat,
wobei der zu 100 Gew.-% fehlende Teil Wasser ist.

Durch den Zusatz von Polyelektrolyten wie Polyacrylamid, Polydadmac, Polyamin, etc. wird im Rahmen der vorteilhaften Ausgestaltung der Erfindung eine ausgezeichnete Flockung und Koagulation erreicht.

Die Polyaluminiumnitratsulfate werden dadurch hergestellt, dass aluminiumhaltiger Rohstoff z. B. Aluminiumhydroxid, Bauxit, aluminiumhaltige Filterschlämme, etc. stöchiometrisch mit einer Mischung aus Schwefel- und Salpetersäure bei Temperaturen von 50 bis 130 °C aufgeschlossen, der Aufschluss mit basischem calciumhaltigen Reagenz, wie Calciumcarbonat, Calciumhydroxid, neutralisiert und der gebildete Gips abgetrennt wird.

Zweckmäßigerweise wird der Gips bei Temperaturen von 60 bis 70 °C abfiltriert und gewaschen.

Der neutralisierte Aufschluss wird im Verhältnis von 1,5 : 1 bis 2,5 : 1 verdünnt, wobei als Verdünnungsmittel in vorteilhafter Weise Waschfiltrat eingesetzt wird.

Alternativ besteht die Möglichkeit, dass aluminiumhaltiger Rohstoff unterstöchiometrisch mit einer Mischung aus Schwefel- und Salpetersäure bei Temperaturen von 130 bis 200 °C aufgeschlossen und unlösliche Bestandteile abgetrennt werden.

Da dieser Aufschluss in der Regel nicht stabil ist, erfolgt eine Verdünnung mit Wasser im Verhältnis von 0,6 : 1 bis 2 : 1. Beim Einsatz von Aluminiumsulfat als Aluminiumhaltiger Rohstoff reicht es aus, wenn der Aufschluss mit Salpetersäure durchgeführt wird.

Die Erfindung ist nachstehend durch mehrere Ausführungsbeispiele näher erläutert:

### 1. Ausführungsbeispiel:

Es werden 200 g Aluminiumhydroxid in 246 g Schwefelsäure (78 %) und 268,2 g Salpetersäure (65 %) in einem 2 l Glasbehälter unter Rühren bei einer Temperatur von 80 °C innerhalb von 40 min gelöst und das gebildete Konzentrat mit 200 ml Wasser verdünnt. In diese Lösung wird eine Suspension aus 175 g Calciumcarbonat und 175 g Wasser innerhalb von 60° eingerührt. Der gebildete Gips wird bei 63 °C abfiltriert und gewaschen und das neutralisierte Konzentrat mit Waschfiltrat im Verhältnis 2 : 1 verdünnt. Das gewonnene Polyaluminiumnitratsulfat besteht aus 5,3 Gew.- % Aluminium, 2,7 Gew.- % Sulfat und 18,2 Gew.- % Nitrat.

### 2. Ausführungsbeispiel:

Es werden 270 g Aluminiumhydroxid in 67,6 g Schwefelsäure (78 %) und 428,8 g Salpetersäure (65 %) in einem Druckreaktor bei 2,5 bar unter Rühren bei einer Temperatur von 150 °C innerhalb 60 Minuten aufgeschlossen. Die unlöslichen Bestandteile werden abfiltriert und das Konzentrat mit Wasser im Verhältnis von 2 : 1 verdünnt. Das erhaltene Polyaluminiumnitratsulfat besteht aus 5,3 Gew.- % Aluminium, 2,5 Gew.- % Sulfat und 17,8 Gew.- % Nitrat.

### 3. Ausführungsbeispiel:

" Das nach dem 1. Ausführungsbeispiel hergestellte Polyaluminiumnitratsulfat wird mit einem flüssigen Polyelektrolyten auf Basis eines Polyacrylamids im Verhältnis von 9 : 1 gemischt. Das auf diese Weise erzeugte Produkt setzt sich aus 4,8 Gew.- % Aluminium, 2,4 Gew.- % Sulfat, 16,4 Gew.- % Nitrat und 1,2 Gew.- % Polyelektrolyt zusammen.

### 4. Ausführungsbeispiel:

Es werden die nach den Ausführungsbeispielen 1 bis 3 hergestellten Polyaluminiumnitratsulfate mit einem herkömmlichen Polyaluminiumchloridsulfat das gemäß DE-A-1907359 hergestellt ist, in ihrem Flockungsverhalten verglichen. Hierzu wird ein Jar-Test mit einem mit 100 ppm pulverförmiger Aktivkohle künstlich verschmutztes Wasser verwendet. Die dosierte Aluminiumkonzentration beträgt jeweils 5,3 ppm.

Für die Überprüfung der Flockungswirkung von Primärflockungsmitteln wird der Becherglasversuch oder Jar-Test durchgeführt. Um unterschiedliche mechanische Einflüsse weitest möglich auszuschließen, werden vergleichende Flockungstests in einer Serie von Bechergläsern mit mechanisch gekoppelten, identisch ausgebildeten Blattrührern durchgeführt, wobei die zu vergleichenden Produkte zeitgleich zugegeben werden. Zur genauen Dosierung werden die zu prüfenden Flockungsmittel als 10 %-ige Lösung frisch angesetzt. Nach Vorlage von 1 l Wasser pro Becherglas werden jeweils 1,0 ml Aktivkohle-Suspension unter Rühren kurz eingemischt. Das so künstlich verunreinigte Wasser wird auf pH-Wert, Temperatur und eventuell auf Alkalien-/Erdalkaliengehalt überprüft. Nach Abmessen einer aluminiumgleichen Dosiermenge wird diese Dosiermenge den einzelnen Testmuster gleichzeitig zugegeben und unter starkem Rühren (200 bis 220 Upm) 60 s lang eingemischt. Anschließend wird 4 min bei 20 bis 30 Upm nachgerührt. Nach Hochziehen der Rührblätter sollen die entstandenen Flocken circa 25 min sedimentieren. Die Parameter Flockenausbildung, Flockengröße, Sedimentationsund Trübstoff-Eleminierungsrate bestimmen gemeinsam die Wirksamkeit eines Flockenmittels. Bereits während der Einmisch- und Nachrührphase ist die Flockenausbildung sowie die Entwicklung der Flockengröße für die jeweiligen Produkte über die Zeit visuell zu beobachten und relativ zueinander zu beschreiben. Desweiteren ist das Sedimentationsverhalten der Flocken festzuhalten, sowie pH-Wert und Temperatur zu kontrollieren. Die Klarheit des Überstandes wird durch Trübungsmesung nach der Sedimentation erfasst. Hierzu werden 50 bis 75 ml des Überstandes aus mittlerer Becherglashöhe entnommen und die Trübung in Formazien - Nephelometrie Einheiten angegeben. Die Untersuchungsergebnisse sind in der 1. Tabelle wiedergegeben.

**1. Tabelle**

| | 1. Ausführungs Beispeil | 2. Ausführungs Beispiel | 3. Ausführungs Beispiel | PAC (DE 1907359) |
|---|---|---|---|---|
| Flockenausbildung | Sehr gut | Sehr gut | Sehr gut | Sehr gut |
| Flockengröße [mm] | 2 - 4 | 2 - 4 | 3 - 5 | 1,5 - 3,5 |
| t_{sed} [min] | 1 | 1 | 0,5 | 1 |
| Trübung vorher [NTU] | 8,0 | 8,0 | 8,0 | 8,0 |
| Trübung nachher [NTU] | 0,68 | 0,68 | 0,48 | 0,61 |

Die Ergebnisse des Jar-Tests zeigen, dass die Produkte nach den Anwendungsbeispielen 1-3 einem PAC nach DE 1907359 ebenbürtig, bei der Flockengröße sogar überlegen sind.

### 5. Ausführungsbeispiel:

Die gemäß den Ausführungsbeispielen 1 bis 3 hergestellten Polyaluminiumnitratsulfate werden im Papierherstellungsprozess mit einem herkömmlichen Polyaluminiumchloridsulfat, hergestellt nach dem Verfahren gemäß DE-A-1907359, in ihrem Entwässerungsverhalten, bei der Störstofffixierung und bei der Leimung verglichen. Die Entwässerungsversuche werden auf einem Schopper-Riegler-Gerät (nach Merkblatt V/7/61 des Vereins der Zellstoff- und Papierchemiker und -ingenieure) durchgeführt. Gemessen wird die Entwässerungszeit einer Standardpulpe aus 70 % Zellstoff und 30 % Altpapier. Die Resttrübung des Filtrats und der chemische Sauerstoffbedarf (CSB) geben Aufschluss über die Retention und Störstofffixierung der Polyaluminiumnitratsulfate. Die Leimung wird an einem Standardpapiersystem (2,4 g atro Zellstoff, Prüfblätter 80 g/m², 20 % CaCO₃) mit unterschiedlichen Leimkonzentrationen über den Cobb60 gemäß DIN 53 132 getestet.

**2. Tabelle**

| | Null Probe | 1. Ausführung Beispiel | 2. Ausführung Beispiel | 3. Ausführung Beispiel | PAC (DE 1907359) |
|---|---|---|---|---|---|
| Entwässerungszeit für 500 ml [min] (1 % atro) | 66 | 48 | 45 | 46 | 44 |
| Trübung des Filtrats [NTU] (1 % atro) | 128 | 62 | 62 | 65 | 62 |
| CSB [mg] (1 % atro) | 77 | 60 | 59 | 61 | 62 |
| Leimung Cobb₆₀ PAC/Leim [% atro] | | | | | |
| | -- | 45 | 43 | 55 | 50 |
| 2,5 | -- | 45 | 43 | 55 | 50 |
| 3,0 | -- | 27 | 29 | 32 | 22 |
| 3,5 | -- | 24 | 27 | 28 | 21 |
| 4,0 | -- | 19 | 22 | 23 | 20 |

Die 2. Tabelle zeigt deutlich, dass sich alle Typen des Polyaluminiumnitratsulfats bei Papieranwendung sowohl im Entwässerungsverhalten, bei der Retention und Störstofffixierung wie herkömmliche Polyaluminiumchloride verhalten. Für alle Polyaluminiumnitratsulfate werden etwas höhere Cobb₆₀ als bei einem vergleichbaren Polyaluminiumchlorid gefunden. Das Leimungsverhalten ist damit als geringfügig schwächer einzustufen als bei herkömmlichen Polyaluminiumchloriden.

Die mit der Erfindung erzielten Vorteile sind insbesondere darin zu sehen, dass bei gleicher Wirkung der Polyaluminiumnitratsulfate verglichen mit Polyaluminiumchloriden kein Chlorid in geschlossenen Wasserkreisläufen eingetragen wird. Hiermit wird insbesondere bei Anwendungen in der Papierproduktion oder in geschlossenen Prozesskreisläufen das Korrosionspotential von wasserberührten Stahlteilen, das durch die Aufkonzentrierung von Chlorid entsteht, erheblich gesenkt.

## Patentansprüche

1. Verfahren zur Herstellung von Polyaluminiumnitratsulfaten zusammengesetzt aus
5,0 % bis 5,6 Gew.- % Aluminium
2,4 bis 3,2 Gew.- % Sulfat
14,5 bis 24,0 Gew.- % Nitrat
wobei der zu 100 Gew.-% fehlende Teil Wasser ist, **dadurch gekennzeichnet, dass** aluminiumhaltiger Rohstoff stöchiometrisch mit einer Mischung aus Schwefel- und Salpetersäure bei Temperaturen von 50 bis 130 °C aufgeschlossen, der Aufschluss mit basischem, calciumhaltigen Reagenz neutralisiert und der gebildete Gips abgetrennt wird.

2. Verfahren nach Anspruch 1, **dadurch gekennzeichnet, dass** der Gips bei Temperaturen von 60 bis 70 °C abfiltriert und gewaschen wird.

3. Verfahren nach Anspruch 1 oder 2, **dadurch gekennzeichnet, dass** der neutralisierte Aufschluss im Verhältnis von 1,5 : 1 bis 2,5 : 1, vorzugsweise mit Waschfiltrat, verdünnt wird.

4. Verfahren zur Herstellung von Polyaluminiumnitratsulfaten zusammengesetzt aus
5,0 bis 5,6 Gew.- % Aluminium
2,4 bis 3,2 Gew.- % Sulfat
14,5 bis 24,0 Gew.- % Nitrat
wobei der zu 100 Gew.-% fehlende Teil Wasser ist, **dadurch gekennzeichnet, dass** aluminiumhaltiger Rohstoff unterstöchiometrisch mit einer Mischung von Schwefel- und Salpetersäure unter einem Druck von 1,0 bis 3,0 bar bei Temperaturen von 130 bis 200 °C aufgeschlossen und die unlöslichen Bestandteile abgetrennt werden.

5. Verfahren nach Anspruch 6, **dadurch gekennzeichnet, dass** der Aufschluss mit Wasser im Verhältnis 0,6:1 1 bis 2 : 1 verdünnt wird.

6. Verfahren nach einem der Ansprüche 1 bis 5, **dadurch gekennzeichnet, dass** den erhaltenen Polyaluminiumnitratsulfaten eine oder mehrere Polyelektrolyte, ausgewählt aus Polyacrylamid. Polydadmac, Polyamin zugesetzt werden, wobei das Verhältnis von Polyaluminiumnitratsulfat zu Polyelektrolyt 99 : 1 bis 1 : 2 beträgt.

7. Verwendung der Polyaluminiumnitratsulfate hergestellt nach einem der Ansprüche 1 bis 6 als Flockungs- und Sedimentationsmittel für die Trink-, Schwimmbecken-, Abwasseraufbereitung und als Hilfsmittel für die Papierherstellung zur Leimung, Störstofffixierung, Entwässerung, Stärkefixierung und Retention.

## Claims

1. Process for the preparation of polyaluminium nitrate sulphates composed of
from 5.0 to 5.6 wt.% aluminium,
from 2.4 to 3.2 wt.% sulphate,
from 14.5 to 24.0 wt.% nitrate,
the remainder to 100 wt.% being water, **characterised in that** an aluminium-containing raw material is digested stoichiometrically with a mixture of sulfuric acid.and nitric acid at temperatures of from 50 to 130°C, the digested product is neutralised with a basic, calcium-containing reagent, and the gypsum that forms is separated off.

2. Process according to claim 1, **characterised in that** the gypsum is filtered off at temperatures of from 60 to 70°C and washed.

3. Process according to claim 1 or 2, **characterised in that** the neutralised digested product is diluted in a ratio of from 1.5 : 1 to 2.5 : 1, preferably with washing filtrate.

4. Process for the preparation of polyaluminium nitrate sulphate composed of
from 5.0 to 5.6 wt.% aluminium,
from 2.4 to 3.2 wt.% sulphate,
from 14.5 to 24.0 wt.% nitrate,
the remainder to 100 wt.% being water, **characterised in that** an aluminium-containing raw material is digested in a less than stoichiometric amount with a mixture of sulfuric acid and nitric acid under a pressure of from 1.0 to 3.0 bar at temperatures of from 130 to 200°C, and the insoluble constituents are separated off.

5. Process according to claim 4, **characterised in that** the digested product is diluted with water in a ratio of from 0.6 : 1 to 2 : 1.

6. Process according to any one of claims 1 to 5, **characterised in that** there are added to the resulting polyaluminium nitrate sulphates one or more polyelectrolytes selected from polyacrylamide, polydadmac, polyamine, the ratio of polyaluminium nitrate sulphate to polyelectrolyte being from 99 : 1 to 1 : 2.

7. Use of polyaluminium nitrate sulphates prepared according to any one of claims 1 to 6 as flocculating and sedimentation agents for the treatment of drinking water, swimming pool water and waste water and as auxiliary agents in the manufacture of paper for sizing, the fixing of interfering substances, dehydration, starch fixing and retention.

## Revendications

1. Procédé de préparation de poly(nitratosulfates d'aluminium) constitués de 5,0 % à 5,6 % en poids d'aluminium, de 2,4 à 3,2 % en poids de sulfate et de 14,5 à 24,0 % en poids de nitrate, le complément à 100 % en poids étant de l'eau, **caractérisé en ce que** l'on attaque à une température de 50 à 130 °C, dans des proportions stoechiométriques, une matière première contenant de l'aluminium avec un mélange d'acide sulfurique et d'acide nitrique, on neutralise la solution d'attaque avec un réactif basique, contenant du calcium, et on sépare le gypse formé.

2. Procédé selon la revendication 1, **caractérisé en ce que** l'on sépare par filtration et lave le gypse à une température de 60 à 70 °C.

3. Procédé selon la revendication 1 ou 2, **caractérisé en ce que** l'on dilue la solution d'attaque neutralisée, dans un rapport de 1,5 :1 à 2,5 :1, de préférence avec le filtrat de lavage.

4. Procédé de préparation de poly(nitratosulfates d'aluminium) constitués de 5,0 à 5,6 % en poids d'aluminium, de 2,4 à 3,2 % en poids de sulfate et de 14,5 à 24,0 % en poids de nitrate, le complément à 100 % en poids étant de l'eau, **caractérisé en ce que** l'on attaque à une température de 130 à 200 °C, sous une pression de 1,0 à 3,0 bars, une matière première contenant de l'aluminium avec un mélange d'acide sulfurique et d'acide nitrique, pris dans des proportions inférieures aux proportions stoechiométriques, et on sépare les constituants insolubles.

5. Procédé selon la revendication 4, **caractérisé en ce que** l'on dilue la solution d'attaque avec de l'eau dans un rapport de 0,6 :1 à 2 :1.

6. Procédé selon l'une quelconque des revendications 1 à 5, **caractérisé en ce que** l'on ajoute aux poly(nitratosulfates d'aluminium) obtenus un ou plusieurs polyélectrolytes, choisis parmi les polyacrylamides, le polydadmac et les polyamines, le rapport du poly(nitratosulfate d'aluminium) au polyélectrolyte étant de 99 :1 à 1 :2.

7. Utilisation des poly(nitratosulfates d'aluminium) préparés par le procédé selon l'une quelconque des revendications 1 à 6, comme floculant et agent de sédimentation pour le traitement de l'eau potable, de l'eau de piscine et des eaux résiduaires, et comme adjuvant pour la fabrication du papier, pour l'encollage, la fixation des produits gênants, l'élimination de l'eau, la fixation de l'amidon et la rétention.
